# NEUE EUROPÄISCHE PATENTSCHRIFT

(11) **EP 0 942 403 B2**
(45) Veröffentlichungstag und Bekanntmachung des Hinweises auf die Entscheidung über den Einspruch: **13.08.2008**
(45) Hinweis auf die Patenterteilung: 22.12.2004
(21) Anmeldenummer: 99102189.0
(22) Anmeldetag: 04.02.1999
(51) Int. Cl.: G08G 1/0969, G01C 21/04

(54) **Verfahren und Vorrichtung zur Darstellung von Informationen für ein Navigationsgerät**
Method and device for representation of information for a navigational apparatus
Méthode et dispositif pour la représentation d'informations pour un appareil de navigation

(30) Priorität: 05.03.1998 DE 19809263
(43) Veröffentlichungstag der Anmeldung: 15.09.1999
(73) Patentinhaber: Volkswagen Aktiengesellschaft, 38436 Wolfsburg (DE)
(72) Erfinder: Sievers, Stefan, 38553 Wasbüttel (DE); Dobberkau, Thomas, 38527 Meine (DE); Kriegel, Dieter, Dipl.-Ing., 38528 Adenbüttel (DE); Golisch, Frank, 38108 Braunschweig (DE)
(74) Vertreter: Zucker, Volker

(56) Entgegenhaltungen:
- EP-A1- 0 777 208
- EP-B1- 0 786 217
- DE-A1- 19 516 647
- DE-A1- 19 537 255
- DE-C2- 4 118 603
- JP-A- 2 275 309
- JP-A- 6 300 575
- US-A- 4 608 656
- US-A- 5 537 323

## Beschreibung

Die Erfindung betrifft ein Verfahren und eine Vorrichtung zur Darstellung von Informationen für ein Navigationsgerät.

Navigationsgeräte, insbesondere solche für Fahrzeuge, sind derart konzipiert, daß eine Karteninformation angezeigt bzw. wiedergegeben wird, die in einem Speicher mit großer Kapazität, beispielsweise einem CD-ROM gespeichert ist, wobei die Wiedergabe über einen Bildschirm durchgeführt wird. Die Karteninformation kann in Form von Verläufen (Richtung bzw. Kurs), Name, Entfernung und Richtungen von Straßen, Plätzen entlang der Straßen, in Form von Plätzen und Namen von Kreuzungen sowie von Örtlichkeiten und Namen von Gebäuden gegeben werden.

Der Zweck eines derartigen Navigationssystems besteht darin, dem Fahrer auf dem Bildschirm die Stelle anzuzeigen, auf der sich das Fahrzeug befindet, wobei die Fahrzeugposition jeweils mit dem Kartenbild als Hintergrund angezeigt wird. Die Anzeige der Fahrzeugposition mit dem Kartenbild im Hintergrund kann auf folgende Weise erfolgen: Die Fahrzeugposition ist gegenüber dem Bildschirm auf eine Position fixiert (im allgemeinen auf eine mittige Position) und das Hintergrundbild wird verschoben, wenn sich das Fahrzeug (vorwärts) bewegt. Diese Methode wird wiederum in zwei Untermethoden klassifiziert:
a) Die Oberseite des Bildschirms ist fest, beispielsweise nach Norden ausgerichtet. Das Hintergrundbild verschiebt sich parallel zur Richtung der Markierung bzw. des Symbols des Fahrzeugs. Obgleich die Markierung auf eine Position auf dem Bildschirm fixiert ist, ändert sie ihre Richtung in Übereinstimmung mit der tatsächlichen Bewegungs- bzw. Reiserichtung des Fahrzeuges und das Hintergrundbild verschiebt sich in angemessener Weise in Übereinstimmung mit der Änderung der Richtung der Markierung.
b) Die Markierung ändert nicht ihre Richtung in Übereinstimmung mit der Richtungsänderung des Fahrzeugs. Jedoch bewegt sich das Hintergrundbild der Mappe parallel und dreht sich in Übereinstimmung mit der tatsächlichen Bewegung des Fahrzeugs.

Gemäß einem zweiten grundsätzlichen Verfahren wird ein Einzelbildabschnitt der Karte fest wiedergegeben, wobei die Oberseite der Karte fest nach Norden gerichtet ist. Die Fahrzeugmarkierung bewegt sich über das feststehende Bild der Karte, bis das Fahrzeug den Randabschnitt des Kartenbildes erreicht. Zu diesem Zeitpunkt und danach erscheinen aufeinanderfolgend weitere, sich nicht verschiebende Abschnitte der Karte. Bei einem weiteren Navigationssystem wird nach Eingabe des Zielortes in Bezug auf die Karte auf dem Schirm automatisch der durch das System empfohlene Weg zum Zielort gewählt und auf der Karte angezeigt.

Das Navigationssystem, das eine Kombination von sowohl der Route als auch der aktuellen Fahrzeugposition anzeigt, zeigt grundsätzlich nur die Route an, entlang welcher sich das Fahrzeug vorwärts bewegt. Bestenfalls enthält es Ecken, an welchen das Fahrzeug drehen kann. Daher hat ein derartiges Navigationssystem die folgenden Nachteile: Bei der Anzeigenmethode wird die Länge der verbleibenden Route kürzer, wenn sich die Fahrzeugposition entlang der angezeigten Route bewegt. Weiterhin kann das Ende des Bildschirms möglicherweise erreicht werden. Zu diesem Zeitpunkt wird die Fortsetzung der Route nicht angezeigt und der Fahrer ist nicht im Stande, die gegenwärtige Fahrzeugposition zu ermitteln. Wenn bei dem anderen Verfahren die Position der Markierung/des Symbol des Fahrzeugs in der Mitte des Schirms liegt, beträgt die Länge der wiedergegebenen Route etwa höchstens die Hälfte der Gesamtlänge des Schirms. Dies ist vom Gesichtspunkt der effektiven Benutzung eines schmalen bzw. kleinen Bildschirms nachteilig.

Aus der DE 41 18 603 C2 ist eine Navigationsvorrichtung für Fahrzeuge bekannt mit einem Display vorbestimmter Größe zur Wiedergabe eines Kartenbildes mit einer Einrichtung zur Einstellung des Maßstabes des Kartenbildes, mit einer Einrichtung zur Ermittlung der aktuellen Fahrzeugposition, wobei in einer ersten Betriebsrat das Kartenbild mit einem solchen Maßstab wiedergegeben sowie derart verschoben wird, daß die aktuelle Fahrzeugposition jeweils etwa in der Mitte des Displays angezeigt wird, während in der zweiten Betriebsart die Fahrtroute mit im wesentlichen maximaler Länge zusammen mit dem Kartenbild angezeigt wird, wobei in der zweiten Betriebsart vor Beginn der Anzeige ein Kartenbild auf dem Display eingestellt wird, welches eine Darstellung eines maximalen Abschnittes des Reiseweges ermöglicht, wonach bei gleichbleibendem Maßstab der angezeigte Abschnitt des Reiseweges durchfahren wird, und daß nach Durchfahren des angezeigten Abschnittes des Reiseweges das nächste Kartenbild angezeigt wird, welches den gleichen Maßstab hat und wieder eine Anzeige eines maximalen Abschnittes des Reiseweges gewährleistet.
Aus der EP 0 542 331 ist eine Navigationsvorrichtung bekannt, mit einem Speicher zur Speicherung kartographischer Daten, einer Positionsaufnahmeeinheit, einer Steuerungseinheit, einer Eingabeeinheit, einem Bildspeicher und einer Display-Einheit, wobei die Steuerungseinheit eingerichtet ist, einen Benutzer entlang einer zuvor bestimmten Route auf Basis von der Positionsaufnahmeeinheit enthaltenen Daten und den kartographischen Daten zu dirigieren, wobei die Steuerungseinheit auch eingerichtet ist zur Wiedergabe eines relevanten Kartenabschnittes mittels der Display-Einheit in den Bildspeicher wiederholt kartographische Daten zu speichern, die in Abhängigkeit von einer von der Positionsaufnahmeeinheit bestimmten aktuellen Position selektiert worden sind, wobei die Steuerungseinheit Bildverarbeitungsmittel umfaßt, um mittels der Display-Einheit die zuvor bestimmte Route in deutlicher Weise in dem Kartenabschnitt wiederzugeben, wobei die Bildverarbeitungsmittel das zum Erreichen der genannten aktuellen Position durchfahrene Routensegment in unterschiedlicher Weise darstellen, wobei nur die lokale Umgebung der aktuellen Fahrzeugposition wiedergegeben wird, einschließlich lokaler Straßenkreuzungssturkturen und Routenandeutungeszeichen in der Karte.

Aus der DE 195 16 647 ist eine Navigationsvorrichtung für Kraftfahrzeuge mit einem Informationsspeicher und mit einem daraus gespeisten Display für einen den aktuellen Standort enthaltenen Landkartenausschnitt bekannt, wo bei einer kleinen Fahrzeuggeschwindigkeit der Maßstab des Landkartenausschnitts sich selbsttätig vergrößert. Durch die selbsttätige Wahl des Vergrößerungsmaßstabes ist der Fahrer entlastet. Ferner ist durch die Kopplung mit der Fahrzeuggeschwindigkeit sichergestellt, daß der Fahrer tatsächlich den Landkartenausschnitt mit dem Maßstab enthält, den er aufgrund seines Fahrverhaltens benötigt. Bei hoher Geschwindigkeit, wie beispielsweise bei einer Autobahnfahrt, wird die Karte mit einem kleinen Maßstab wiedergegeben. Er enthält Informationen über ein relativ großes Gebiet. Typischerweise ist hier ein Maßstab von 1 : 100 000 zu nennen. Bei kleinen Geschwindigkeiten hingegen, wie sie im innerstädtischen Verkehr vorliegen, wird der Kartenmaßstab vergrößert. Als Beispiel kann ein Maßstab von 1 : 10 000 gelten. Die Anpassung des Maßstabes kann auch in mehreren Stufen vorgenommen werden. Es kann auch beispielsweise ein Zwischenmaßstab von 1 : 50 000 vorgesehen sein, wenn die Geschwindigkeit einen mittleren Wert annimmt. Die Zuordnung des Maßstabs zur jeweiligen Fahrzeuggeschwindigkeit wird sinnvollerweise anhand eines Durchschnittswertes der Fahrzeuggeschwindigkeit vorgenommen. Es wird hier beispielsweise ein Zeitraum von 10 min vorgegeben und der Geschwindigkeitsmittelwert über diese Zeit genommen. Weiter wird in der Druckschrift vorgeschlagen, daß die Maßstabumschaltung auch von der Entfernung abhängig sein kann, in der sich das Fahrzeug vor einem Zielort befindet. Der Zielort seinerseits kann beispielsweise vor Beginn der Fahrt manuell eingegeben werden oder aber auch bei vorgegebener Fahrstrecke vorbekannt sein. Befindet sich das Fahrzeug in einem vorgegebenen Abstand von beispielsweise 1 km vor Erreichen des Ziels, kann selbsttätig auf den größeren Maßstab umgestellt werden. Damit wird das Auffinden des Ziels erleichtert. Nachteilig an der bekannten Navigationsvorrichtung ist, daß die benötigte Informationsdichte nicht automatisch von der Fahrzeuggeschwindigkeit abhängig sein muß, so daß der Kraftfahrzeugführer gegebenenfalls zuviel oder zuwenig Informationen durch den dargestellten Maßstab enthält.

Der Erfindung liegt daher das technische Problem zugrunde, ein Verfahren und eine Vorrichtung zur Darstellung von Informationen für ein Navigationsgerät zu schaffen, bei der die Darstellung der Informationen optimaler den Bedürfnissen des Kraftfahrzeugführers angepaßt ist.

Die Lösung des technischen Problems ergibt sich durch die Merkmale der Patentansprüche 1 und 2. Durch die adaptive Anpassung des Maßstabes in Abhängigkeit von der Entfernung zwischen dem aktuellen Standort und dem nächstliegenden Entscheidungs- und/oder Orientierungspunkt, enthält der Fahrer stets dann eine hohe Informationsdichte durch Wahl eines kleinen Maßstabes, wenn dieser sich wirklich orientieren muß. Dies kann jedoch auch bei hohen Fahrzeuggeschwindigkeiten der Fall sein, beispielsweise bei der Abfahrt von einer Autobahn, so daß gemäß dem Stand der Technik ein sehr großer Maßstab angezeigt werden würde. Im Gegensatz hierzu erhält der Fahrer gemäß der- Erfindung bei Annäherung an die zuvor selektierten Entscheidungs- und/oder Orientierungspunkte stets einen vergrößerten Maßstab, unabhängig von seiner Fahrzeuggeschwindigkeit, so daß der Fahrer genau dann, wenn dieser eine Entscheidung zu treffen hat, beispielsweise weil ein Abbiegen oder ein anderes Lenkmanöver notwendig ist, ein Maximum an Informationen dargestellt bekommt. Nachdem der Fahrer den Entscheidungspunkt passiert hat, vergrößert sich wieder der Maßstab, so daß der Fahrer wieder einen verbesserten Gesamtüberblick erhält. Weiter ist die Geschwindigkeit der Adaption, also beispielsweise die Taktfrequenz mit der eine neue Darstellung berechnet wird, von der eigenen Fahrzeuggeschwindigkeit abhängig. Weitere vorteilhafte Ausgestaltungen der Erfindung ergeben sich aus den Unteransprüchen.

In einer weiteren bevorzugten Ausgestaltung wird der Maßstab gerade so gewählt, daß der aktuelle Standort und der nächstliegende Entscheidungspunkt möglichst bildfüllend auf dem Display dargestellt sind.

Weiter ist vorgesehen, daß der Fahrer zusätzliche Orientierungspunkte auswählen und/oder selektierte Orientierungspunkte löschen kann, wodurch eine individuell angepaßte Darstellung möglich ist. So kann beispielsweise der Fahrer einen Routineabschnitt sehr gut kennen, so daß dieser unter Umständen großmaßstäbliche Darstellungen als überflüssig und sogar störend empfinden kann. Im umgekehrten Fall kann es Abschnitte geben, die der Fahrer für besonders unübersichtlich hält, so daß dieser hier gerne mehr Informationen dargestellt bekommen möchte.

Darüber hinaus kann das Maß der Adaption bei der Annäherung anders gewählt werden, als die Adaption nach Passieren eines Entscheidunspunktes.

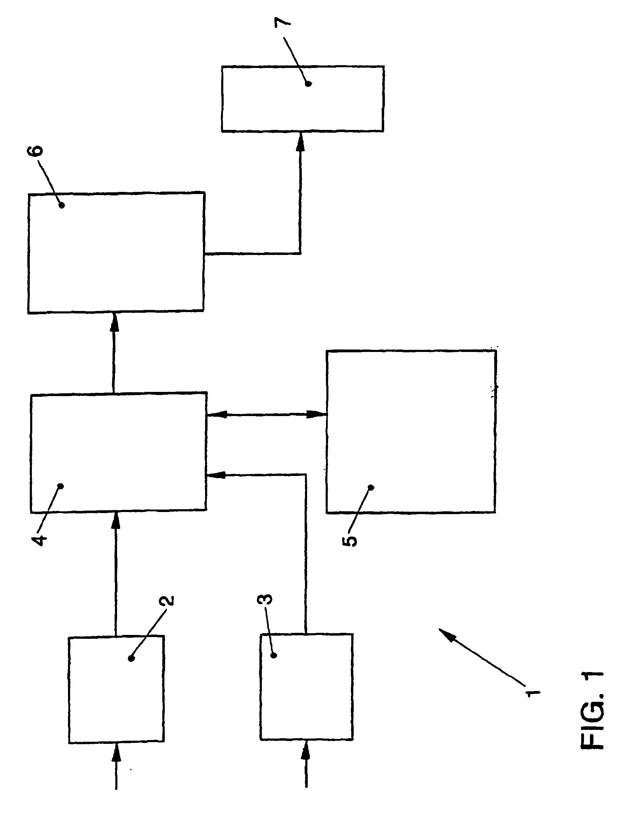

Die Erfindung wird nachfolgend anhand eines bevorzugten Ausführungsbeispiels , näher erläutert. die einzige Figur zeigt ein schematisches Blockschaltbild einer Vorrichtung zur Darstellung von Informationen für ein Navigationsgerät.

Die Vorrichtung 1 umfaßt eine Eingabeeinheit 2, eine Einrichtung 3 zur Positionsbestimmung, eine Auswerteeinheit 4, einen Informationsspeicher 5, eine Steuereinheit 6 und ein Display 7.

Die Eingabeeinheit 2, die beispielsweise als alphanumerische Tastatur ausgebildet ist, ist ausgangsseitig mit einem Dateneingang der Auswerteeinhei 4 verbunden. ebenso ist die Einrichtung 3 zur Positionsbestimmung ausgangsseitig mit einem weiteren Dateneingang der Auswerteeinheit 4 verbunden. Über die Eingabeeinheit 2 kann ein gewünschter Zielpunkt vom Kraftfahrzeugführer eingegeben werden. Die Auswerteeinheit 4 ermittelt dann mittel bekannter Algorithmen eine optimale Route zwischen dem aktuellen Standort und dem gewünschten Zielpunkt, wozu auf die Verkehrsraumdaten im Informationsspeicher 5 zurückgegriffen wird, die beispielsweise in Form einer digitalen Vektorkarte vorliegen. Gegebenenfalls werden bei der Erstellung der Route aktuelle Verkehrsmeldungen berücksichtigt. Nachdem die Route ermittelt wurde, wird diese für den Fahrer auf dem Display 7 dargestellt. Zusätzlich werden von der Auswerteeinheit 4 Entscheidungs- und Orientierungspunkte selektiert und in der dargestellten Route optisch hervorgehoben. Entscheidungspunkte sind dabei Orte, an denen der Fahrer aktiv Handlungen vornehmen muß, beispielsweise Abbiegen an Kreuzungen, Autobahnabfahrten und ähnliches. Orientierungspunkte sind Orte hoher Verkehrsinformationsdichte, an denen eigentlich der Fahrer nicht aktiv zu werden braucht, jedoch aufgrund mangelnder Übersicht zu einem Fehlverhalten verleitet werden könnte. Der Fahrer kann dann die auf dem Display 7 dargestellten Route mit den selektierten Entscheidungs- und Orientierungspunkten bestätigen, oder aber zusätzliche Orientierungspunkte eingeben bzw. selektierte Punkte löschen. Ist dieser Eingabevorgang abgeschlossen, so existiert in der Auswerteeinheit 4 die komplette Route mit einer Anzahl von Entscheidungs- und Orientierungspunkten. Die Auswerteeinheit 4 liest darauf die zwischen dem aktuellen Standort und dem ersten Entscheidungs- oder Orientierungspunkt liegenden Verkehrsraumdaten aus dem Informationsspeicher 5 aus und setzt diese in einen Maßstab um, so daß der aktuelle Standort und der nächstliegende Entscheidungs- oder Orientierungspunkt möglichst bildfüllend auf dem Display 7 dargestellt werden. Nächstliegend bedeutet dabei nicht zwangsläufig den Luftlinie am nächsten befindlichen Punkt, sondern den zeitlich als nächsten zu passierenden Punkt. Ebenso ist es möglich, daß stets der aktuelle Standort in der Mitte des Displays 7 dargestellt wird. Dies reduziert zwar die darstellbare Informationsdichte, da ca. ein doppelt so großer Maßstab gewählt werden muß, jedoch kann die zentrale Darstellung die optische Wahrnehmung durch den Fahrer verbessern. Da sich das Kraftfahrzeug bewegt, ist die Darstellung auf dem Display 7 immer nur für einen bestimmten Zeitraum richtig. Die Taktrate, mit der die Darstellung auf dem Display 7 aktualisiert werden muß, wird in Abhängigkeit von dem äußeren Parameter der Fahrzeuggeschwindigkeit verändert . Zusätzlich kann die Taktrate von der Verkehrsraumdichte abhängig sein. Nähert sich nun das Kraftfahrzeug dem Orientierungs- oder Entscheidungspunkt, so werden die Informationen in einem immer kleineren Maßstab dargestellt, so daß der Fahrer kurz vor Erreichen des Punktes einen optimalen Überblick erhält. Nach dem Passieren des Punktes gibt es alternativ zwei Vorgehensweisen. Entweder wird für einen kurzen Zeitraum noch der passierte Punkt dargestellt, wobei sich dann der Maßstab sukzessive vergrößert, oder aber es wird sofort auf den nächstfolgenden Orientierungs- oder Entscheidungspunkt umgeschaltet und dieser mit dem aktuellen Standort bildfüllend dargestellt.

## Patentansprüche

1. Vorrichtung zur Darstellung von Informationen für ein Navigationsgerät, umfassend eine Eingabeeinheit (2), einen Informationsspeicher (5), eine Einrichtung zur Positionsbestimmung (3), eine Auswerteeinheit (4) und eine Steuereinheit (6) zur Ansteuerung eines Displays (7), wobei anhand des über die Eingabeeinheit eingebbaren Zielpunktes und des mittels der. Einrichtung zur Positionsbestimmung ermittelbaren aktuellen Standortes durch die Auswerteeinheit anhand der im informationsspeicher abgelegten Verkehrerauminformationen eine Route zum Zielpunkt ermittelbar ist,
**dadurch gekennzeichnet,**
**dass** die Auswerteeinheit (4) Mittel zum Bestimmen von Entscheidungs- und/oder Orientierungspunkten innerhalb der Route sowie Mittel zum adaptiven Darstellen des Maßstabes des darzustellenden Kartenabschnittes in Abhängigkeit von der Entfernung zum nächstliegenden Entscheidungs- und/oder Orientierungspunkt umfasst, wobei die Geschwindigkeit der Adaption des Maßstabes durch einen Parameter veränderbar ist, wobei in Abhängigkeit der Fahrzeuggeschwindigkeit der Parameter geändert wird, so daß bei höheren Fahrzeuggeschwindigkeiten die Häufigkeit der Adaptionen pro Strecke erhöht wird.

2. Verfahren zur Darstellung von Informationen für ein Navigationsgerät, mittels einer Eingabeeinheit (2), eines Informationsspeichers (5), einer Einrichtung (3) zur Positionsbestimmung, einer Auswerteeinheit (4) und einer Steuereinheit (6) zur Ansteuerung eines Displays (7), umfassend folgende Verfahrensschritte:
a) eingeben eines gewünschten Zielpunktes mittels der Eingabeeinhelt (2),
b) ermitteln des aktuellen Standortes mittels der Einrichtung (3) zur Positionsbestimmung,
c) berechnen einer Route vom aktuellen Standort zum gewünschten Zielpunkt anhand der im informationsspeicher (5) abgelegten Verkehrsraumdaten durch die Auswerteeinheit (4),
d) selektieren und zwischenspeichern von Entscheidungs-und/oder
Orientierungspunkten innerhalb der nach Verfahrensschritt c) berechneten Route,
e) auslesen der um den aktuellen Standort liegenden Verkehrsraumdaten aus dem Informationsspeicher (5) durch die Auswerteeinheit (4),
f) bestimmen der Entfernung vom aktuellen Standort zum nächstliegenden Entscheidungs- und/oder Orientierungspunkt gemäß Verfahrensschritt d),
g) berechnen eines Maßstabes der darzustellenden Informationen in Abhängigkeit von der bestimmten Entfernung und
h) übergeben der sich innerhalb des Maßstabes befindlichen Daten an die Steuereinheit (6), wobei die Geschwindigkeit der Adaption des Maßstabes durch einen Parameter veränderbar ist, wobei in Abhängigkeit der Fahrzeuggeschwindigkeit der Parameter geändert wird, so daß bei höheren Fahrzeuggeschwindigkeiten die Häufigkeit der Adaptionen pro Strecke erhöht wird.

3. Verfahren nach Anspruch 2, **dadurch gekennzeichnet, dass** der Maßstab stets so gewählt wird, dass der aktuelle Standort und der nächstliegende Entscheidungs- und/oder Orientierungspunkt weitgehend bildfüllend auf dem Display (7) dargestellt werden,

4. Verfahren nach Anspruch 2 oder 3, **dadurch gekennzeichnet, dass** nach Eingabe des Zielpunktes die selektierten Punkte innerhalb der Route dargestellt werden und über die Eingabeeinheit (2) zusätzliche Punkte eingebbar und/oder selektierte Punkte löschbar sind.

5. Verfahren nach einem der Ansprüche 2 bis 4, **dadurch gekennzeichnet, dass** das Maß der Adaption bei der Annäherung an bzw. Entfernung von einem Entscheidungspunkt unterschiedlich ist.

## Claims

1. Apparatus for showing information for a navigation appliance, comprising an input unit (2), an information store (5), a position-finding device (3), an evaluation unit (4) and a control unit (6) for actuating a display (7), where the destination, which can be input using the input unit, and the current location, which can be ascertained using the position-finding device, can be used by the evaluation unit to ascertain a route to the destination on the basis of the traffic area information stored in the information store,
**characterized**
**in that** the evaluation unit (4) comprises means for determining decision and/or orientation points within the route and means for adaptively showing the scale of the map section which is to be shown on the basis of the distance to the next decision and/or orientation point, where the speed of adaptation of the scale can be altered by a parameter, the vehicle speed being taken as a basis for changing the parameter, so that at higher vehicle speeds the frequency of the adaptation operations per section is increased.

2. Method for showing information for a navigation appliance, using an input unit (2), an information store (5), a position-finding device (3), an evaluation unit (4) and a control unit (6) for actuating a display (7), comprising the following method steps:
a) a desired destination is input using the input unit (2),
b) the current location is ascertained using the position-finding device (3),
c) a route from the current location to the desired destination is calculated by the evaluation unit (4) on the basis of the traffic area data stored in the information store (5),
d) decision and/or orientation points within the route calculated in line with method step c) are selected and buffer-stored,
e) the traffic area data situated around the current location are read from the information store (5) by the evaluation unit (4),
f) the distance from the current location to the next decision and/or orientation point in line with method step d) is determined,
g) a scale for the information which is to be shown is calculated on the basis of the determined distance, and
h) the data which are within the scale are transferred to the control unit (6), where the speed of adaptation of the scale can be altered by a parameter, the vehicle speed being taken as a basis for changing the parameter, so that at higher vehicle speeds the frequency of the adaptation operations per section is increased.

3. Method according to Claim 2, **characterized in that** the scale is always chosen such that the current location and the next decision and/or orientation point are shown largely in full-picture format on the display (7).

4. Method according to Claim 2 or 3, **characterized in that** input of the destination is followed by the selected points within the route being shown and the input unit (2) being able to be used to input additional points and/or to delete selected points.

5. Method according to one of Claims 2 to 4, **characterized in that** the degree of adaptation is different when approaching and leaving a decision point.

## Revendications

1. Dispositif pour la présentation d'informations destinées à un appareil de navigation, comprenant une unité d'entrée (2), une mémoire d'information (5), un appareil (3) pour le calcul de la position, une unité d'analyse (4) et une unité de commande (6) pour la commande d'un écran (7), un itinéraire pour atteindre la destination pouvant être déterminé à l'aide de la destination pouvant être entrée par l'unité d'entrée et de l'emplacement actuel pouvant être déterminé au moyen de l'appareil pour le calcul de la position par l'unité d'analyse à l'aide des informations sur l'espace de circulation déposées dans la mémoire d'information,
**caractérisé en ce que**
l'unité d'analyse (4) comprend des moyens pour la détermination de points de décision et/ou d'orientation à l'intérieur de l'itinéraire ainsi que des moyens pour la représentation adaptative de l'échelle de l'extrait de carte à représenter en fonction de la distance au point de décision et/ou d'orientation le plus proche, la vitesse d'adaptation de l'échelle pouvant être modifiée par un paramètre, le paramètre étant modifié en fonction de la vitesse du véhicule, de sorte qu'à des vitesses élevées du véhicule, la fréquence des adaptations par section soit accrue.

2. Procédé pour la représentation d'informations destinées à un appareil de navigation, au moyen d'une unité d'entrée (2), d'une mémoire d'information (5), d'un appareil (3) pour le calcul de la position, d'une unité d'analyse (4) et d'une unité de commande (6) pour la commande d'un écran (7), comprenant les étapes de procédé suivantes :
a) entrée d'une destination souhaitée au moyen de l'unité d'entrée (2),
b) détermination de l'emplacement actuel au moyen de l'appareil (3) pour le calcul de position,
c) calcul d'un itinéraire pour aller de l'emplacement actuel à la destination souhaitée à l'aide des données sur l'espace de circulation déposées dans la mémoire d'information (5) par l'unité d'analyse (4),
d) sélection et stockage intermédiaire de points de décision et/ou d'orientation à l'intérieur de l'itinéraire calculé selon l'étape de procédé c),
e) extrait des données sur l'espace de circulation se trouvant autour de l'emplacement actuel de la mémoire d'information (5) par l'unité d'analyse (4),
f) calcul de la distance de l'emplacement actuel au point de décision et/ou d'orientation le plus proche selon l'étape de procédé d),
g) calcul d'une échelle des informations à représenter en fonction de la distance calculée, et
h) transfert des données se trouvant à l'intérieur de l'échelle à l'unité de commande (6), la vitesse d'adaptation de l'échelle pouvant être modifiée par un paramètre, le paramètre étant modifié en fonction de la vitesse du véhicule, de sorte qu'à des vitesses élevées du véhicule, la fréquence des adaptations par section soit accrue.

3. Procédé selon la revendication 2, **caractérisé en ce que** l'échelle est toujours choisie de telle sorte que l'emplacement actuel et le point de décision et/ou d'orientation le plus proche sont représentés à l'écran (7) en remplissant largement l'image.

4. Procédé selon la revendication 2 ou 3, **caractérisé en ce que**, après l'entrée de la destination, les points sélectionnés sont représentés à l'intérieur de l'itinéraire et des points supplémentaires peuvent être entrés par l'unité d'entrée (2) et/ou des points sélectionnés peuvent être effacés.

5. Procédé selon l'une quelconque des revendications 2 à 4, **caractérisé en ce que** l'échelle de l'adaptation est différente lors de l'approche et/ou de l'éloignement d'un point de décision.
